# EUROPEAN PATENT APPLICATION

(11) **EP 1 683 996 A1**
(43) Date of publication of application: **26.07.2006**
(21) Application number: 06100642.5
(22) Date of filing: 20.01.2006
(51) Int. Cl.: F16K 31/34

(54) **Filter for a flush tank float-controlled fill tap**

(30) Priority: 21.01.2005 IT MI20050081
(71) Applicant: Oliveira & Irmao S.A., 3800 Aveiro (PT)
(72) Inventor: Moura de Oliveira, Antonio Manuel, 3800-25, Aveiro (PT)
(74) Representative: Jorio, Paolo

(57) **Abstract**

A float-controlled fill tap (1) for a flush tank has a valve assembly (5), in particular a counterpressure valve assembly with a diaphragm (11), controlled by a float assembly (6) and interposed between an inlet conduit (7), connectable to a water mains, and an outlet conduit (8); and a filter (50) is housed removably inside a seat (51) and located upstream from the valve assembly (5), at one end (45a) of the inlet conduit (7).

## Description

The present invention relates to a float-controlled fill tap for a sanitary fixture flush tank.

As is known, a sanitary fixture flush tank has a fill tap connected to the water mains. The most commonly used fill taps substantially comprise a fitting for connection to the water mains; a valve assembly housed in a casing; and a movable float controlling a shutter on the valve assembly.

The valve assembly may be a direct piston-closed type (in which the float-controlled shutter acts directly on the nozzle connected to the mains) or a counterpressure or diaphragm closure type (in which the shutter acts on a service nozzle which closes a counterpressure chamber defined by a membrane deformable elastically by the pressure of the water.

Water flow through the valve assembly may result in deterioration or wear of the valve assembly components, especially in the case of relatively hard water. The problem is further compounded in the case of counterpressure valve assemblies, operation of which may be impaired not only by deterioration of the elastic characteristics of the membrane, but also by foreign particles or other contaminants.

It is an object of the present invention to provide a solution to the above problem. More specifically, it is an object of the invention to provide a float-controlled fill tap designed to ensure efficient, long-term operation by safeguarding the integrity and efficiency of the valve assembly components.

According to the present invention, there is provided a float-controlled fill tap for a flush tank, as defined in the accompanying Claim 1.

By virtue of the filter, the fill tap according to the invention reduces wear of the valve assembly by protecting the valve assembly against direction action by the pressurized water flow in the inlet conduit; the filter also prevents any of various contaminants in the water from sooner or later impairing operation of the valve assembly; and the fill tap according to the invention is also cheap and easy to produce and install.

A non-limiting embodiment of the present invention will be described by way of example with reference to the accompanying drawings, in which:
Figure 1 shows a front view of a fill tap in accordance with the invention;
Figure 2 shows a larger-scale, partly sectioned side view of a top portion of the Figure 1 fill tap;
Figures 3 and 4 show an exploded front view and an exploded cross section respectively of a filter and relative seat forming part of the Figure 1 fill tap;
Figure 5 shows a section along line V-V in Figure 4;
Figures 6, 7, 8 show the Figure 3 filter in different positions inside its seat.

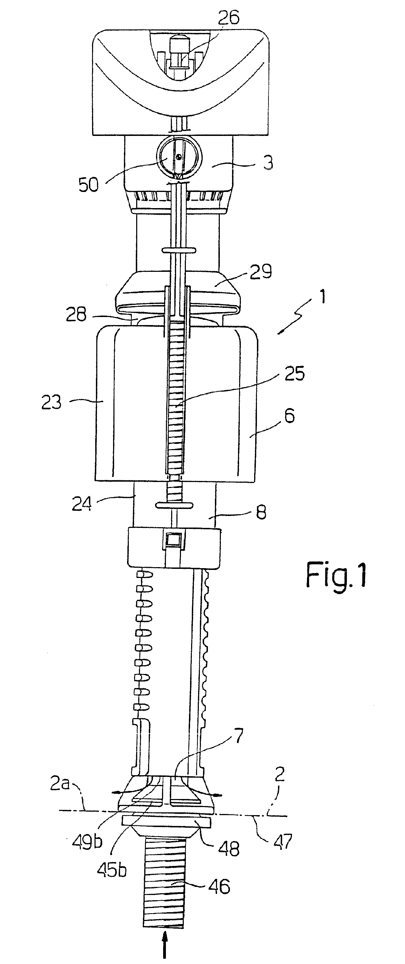

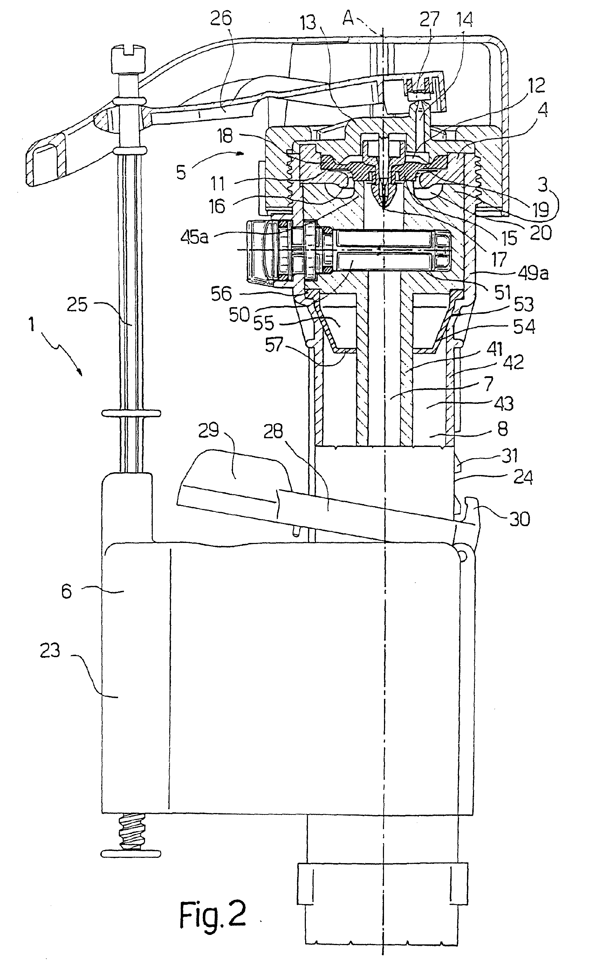

Number 1 in Figures 1 and 2 indicates as a whole a float-controlled fill tap, in particular an up-fill tap, for a known flush tank 2 (only shown schematically) of a sanitary fixture. Fill tap 1 is housed inside a vessel 2a of tank 2, and comprises a body 3 having an inner cavity 4 housing a valve assembly 5 controlled by a float assembly 6; an inlet conduit 7 downstream from valve assembly 5 and connectable to a water mains to supply water to valve assembly 5; and an outlet conduit 8 upstream from valve assembly 5, and by which the water flowing through valve assembly 5 is fed into tank 2.

Valve assembly 5 (Figure 2) is a substantially known counterpressure valve assembly, and comprises an elastically deformable, disk-shaped diaphragm 11; and a counterpressure chamber 12 formed in cavity 4, between diaphragm 11 and a wall 13 of body 3. Wall 13 has a through relief nozzle 14 connecting counterpressure chamber 12 to the outside of body 3. Diaphragm 11 comprises an annular central portion 15, which cooperates in fluidtight manner with an end edge 16 of inlet conduit 7, and is fitted through centrally with a pin member 17; a radially outer, peripheral edge 18 inserted in fluidtight manner inside a groove formed in wall 13; and a hinge portion 19 connecting central portion 15 to peripheral edge 18 and interposed between counterpressure chamber 12 and an annular conduit 20.

As in a known solution described in EP-A-1270830, float assembly 6 comprises a main float 23 fitted in axially sliding manner to the outside of a guide member 24 and connected mechanically by an adjustable rod 25 to a lever 26 having a shutter 27 which cooperates with nozzle 14 to control operation of valve assembly 5; and a rocking member 28 hinged to float 23 and having an auxiliary float 29, and a hook 30 which cooperates with a number of teeth 31 on guide member 24 to selectively connect-disconnect float 23 and guide member 24 as the water level in tank 2 varies.

Inlet conduit 7 and outlet conduit 8 are substantially straight and parallel and, in particular, substantially coaxial along an axis A which is substantially vertical in use. Inlet conduit 7 and outlet conduit 8 are defined by two tubular members 41, 42 extending along axis A, located one inside the other, and separated by an annular gap 43.

The radially inner member 41 has a top end 45a for attachment to body 3 (Figure 2), and a free bottom end 45b (Figure 1); end 45a terminates with end edge 16; and end 45b is fitted with a fitting 46 for connection to the water mains, and which is fitted through a hole in a bottom wall 47 of tank 2, and with a ring nut 48 for assembly to wall 47.

The radially outer member 42 has a top end 49a for attachment to body 3 (Figure 2), and an open free bottom end 49b (Figure 1). Inlet conduit 7 is defined inside member 41, and outlet conduit 8 is defined inside annular gap 43 between members 41, 42.

Fill tap 1 also comprises a filter 50 housed removably inside a seat 51 in body 3 and located upstream from valve assembly 5 along inlet conduit 7 and, in particular, upstream from diaphragm 11 at end 45a of member 41 defining inlet conduit 7.

Fill tap 1 also comprises a non-return valve 53 fitted, downstream from valve assembly 5, to outlet conduit 8 - more specifically, at end 49a of member 42 - to prevent backflow of water from outlet conduit 8 to valve assembly 5. Valve 53 comprises an elastically deformable, substantially cup-shaped membrane 54 defining a cavity 55 facing valve assembly 5, i.e. facing the direction from which water flows from valve assembly 5. Membrane 54, at one axial end, has a peripheral fastening edge 56 fixed to an inner wall of member 42, and, at the opposite axial end, has a ring 57 having a central hole and fixed about member 41.

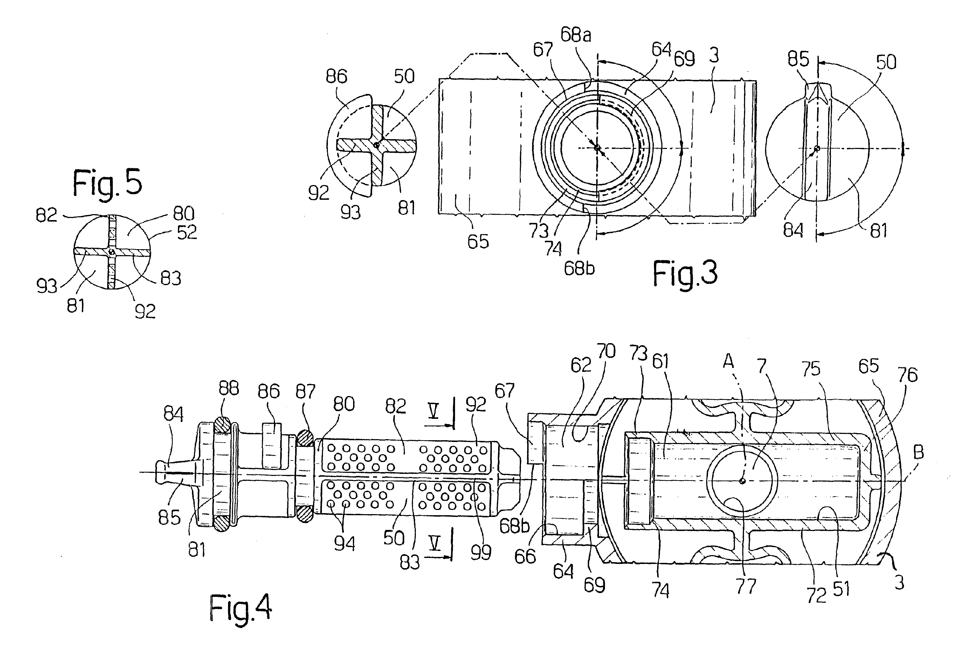

With reference to Figures 3 and 4, seat 51 extends inside body 3 along an axis B substantially perpendicular to axis A and, therefore, to inlet conduit 7 and outlet conduit 8, and has a first and second cavity 61, 62 communicating and aligned along axis B.

The outermost cavity 62 is bounded by a substantially cylindrical, axially open collar 64 projecting substantially perpendicularly from a lateral wall 65 of body 3. Collar 64 comprises an inlet opening 66 having a raised circumferential edge portion 67 with two, respectively top and bottom, end stop surfaces 68a, 68b; and a radially inner stop member 69 projecting radially from an inner lateral surface 70 of collar 64.

The innermost cavity 61 is bounded by a substantially cylindrical lateral wall 72, and comprises an open end 73 facing cavity 62 and having an outer axial shoulder 74; and an end 75 opposite end 73 and closed by a rear wall 76.

Lateral wall 72 comprises two through openings 77 aligned along axis A, and through which cavity 61 (i.e. seat 51) communicates with inlet conduit 7.

With reference also to Figure 5, filter 50 comprises a one-piece plastic body 80 extending along axis B and having a head 81, a filtering portion 82, and a shutter portion 83.

Head 81 is substantially cylindrical, and has a user operating member 84 defined, in the example shown, by a prismatic diametrical projection projecting axially from one end of head 81 and having a radially outer projection 85. Head 81 also comprises a substantially semicircular, radially outer tooth 86 projecting radially from an outer lateral surface of head 81, and is fitted with two radial sealing rings 87, 88, of different outside diameters, fitted to respective portions of head 81 of different diameters.

Filtering portion 82 and shutter portion 83 are defined respectively by a perforated plate 92 and a solid plate 93, which project axially from head 81 in the opposite direction to operating member 84. Plates 92, 93 are arranged crosswise and perpendicular to each other, and are both equal in width to the inside diameter of cavity 61; and plate 92 has a number of small-diameter through holes 94.

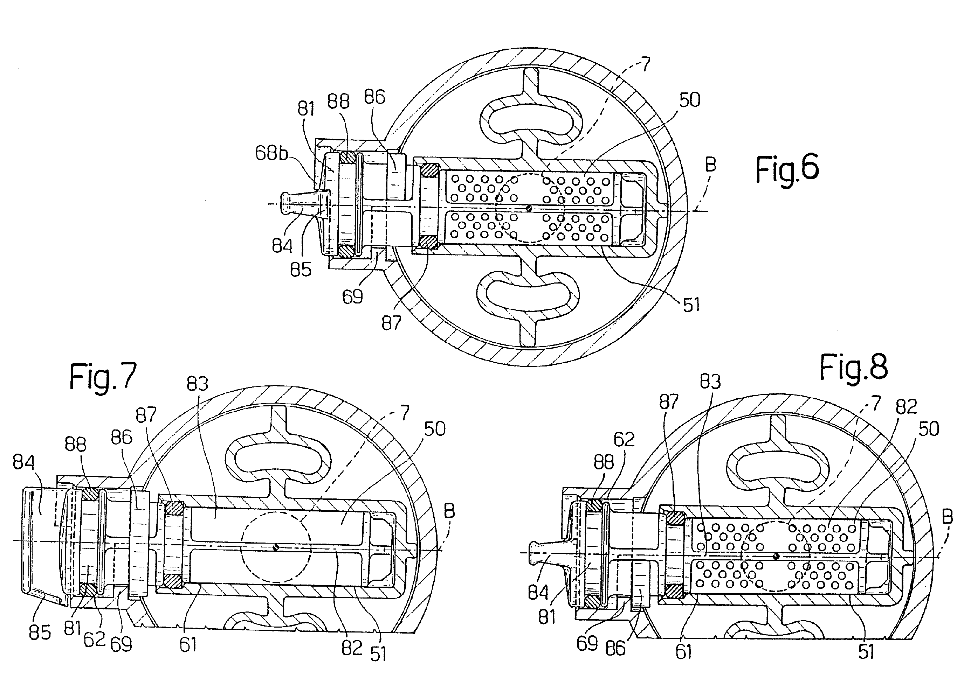

With reference also to Figures 6-8, filter 50 is housed inside seat 51 to rotate about axis B. More specifically, filter 50 rotates inside seat 51 to selectively assume one of the following operating positions:
- an extraction position (Figure 6), in which filter 50 can be inserted into and removed from seat 51 along axis B;
- a cut-off position (Figure 7), in which filter 50 cuts off water flow to valve assembly 5;
- a filtering position (Figure 8), in which filter 50 allows filtered water flow to valve assembly 5.

In the extraction position, shown in Figures 3, 4 and 6, tooth 86 on filter 50 is offset axially with respect to stop member 69 on seat 51, operating member 84 is located laterally with respect to edge portion 67, and projection 85 (facing upwards) rests against the top stop surface 68a, so that filter 50 can slide along axis B inside seat 51.

Tooth 86 and stop member 69, in fact, define releasable lock members which operate, by rotation of filter 50 about axis B inside seat 51, to alternatively lock filter 50 axially inside seat 51 along axis B, and release filter 50 from seat 51 along axis B.

Starting from the extraction position, rotation of filter 50 about axis B inside seat 51 - in the example shown, 90° clockwise rotation - sets filter 50 to the Figure 7 cut-off position, in which tooth 86 now axially engages stop member 69 to prevent filter 50 sliding along axis B inside seat 51; sealing rings 87, 88 cooperate with respective sealing surfaces of cavities 61, 62, and sealing ring 87 rests against shoulder 74; and shutter portion 83 is perpendicular to axis A and to inlet conduit 7, thus cutting off the water flow in inlet conduit 7, and so preventing water flow from inlet conduit 7 to valve assembly 5.

Further rotation of filter 50 inside seat 51 - in the example shown, further 90° clockwise rotation - sets filter 50 to the Figure 8 filtering position, in which tooth 86 still axially engages stop member 69 to lock filter 50 axially inside seat 51; operating member 84 is located laterally with respect to edge portion 67; and projection 85 (now facing downwards) rests against bottom stop surface 68b.

Sealing rings 87, 88 still cooperate with respective sealing surfaces of cavities 61, 62; and filtering portion 82 is now perpendicular to axis A and to inlet conduit 7, so that, as opposed to being cut off, water flow in inlet conduit 7 is filtered before reaching valve assembly 5.

In this situation, fill tap 1 operates in the same way as similar known fill taps with counterpressure valve assemblies. Briefly, when the water is drained from tank 2, float assembly 6 opens nozzle 14, and the mains water pressure in inlet conduit 7 deforms hinge portion 19 of diaphragm 11; the water is filtered by filter 50 before reaching valve assembly 5; and the water then flows from inlet conduit 7 into annular conduit 20, and from there, via non-return valve 53, into outlet conduit 8 and out through end 49b to fill tank 2. Once tank 2 is filled, float assembly 6 closes nozzle 14 to cut off the water supply.

Clearly, changes may be made to the fill tap as described and illustrated herein without, however, departing from the scope of the accompanying Claims.

## Claims

1. A float-controlled fill tap (1) for a flush tank, comprising a valve assembly (5) controlled by a float assembly (6) and interposed between an inlet conduit (7), connectable to a water mains, and an outlet conduit (8); the fill tap being **characterized by** comprising a filter (50) housed inside a seat (51) and located upstream from the valve assembly (5).

2. A fill tap as claimed in Claim 1, **characterized in that** the valve assembly (5) is a counterpressure valve assembly having a diaphragm (11); the filter (50) being located upstream from the diaphragm (11), at one end (45a) of the inlet conduit (7).

3. A fill tap as claimed in Claim 1 or 2, **characterized in that** the filter (50) is extractable from the seat (51).

4. A fill tap as claimed in Claim 3, **characterized in that** the filter (50) is insertable into and extractable from the seat (51) along an axis (B) substantially perpendicular to the inlet conduit (7).

5. A fill tap as claimed in Claim 4, **characterized by** comprising releasable lock members (69, 86) for alternatively locking the filter (50) inside the seat (51) along said axis (B), and releasing the filter (50) from the seat (51) along said axis (B).

6. A fill tap as claimed in Claim 5, **characterized in that** said releasable lock members (69, 86) operate by rotation about said axis (B).

7. A fill tap as claimed in one of the foregoing Claims, **characterized in that** the filter (50) is movable inside the seat (51) to selectively assume a filtering position, in which the filter (50) permits filtered water flow to the valve assembly (5), and a cut-off position, in which the filter (50) cuts off water flow to the valve assembly (5).

8. A fill tap as claimed in Claim 7, **characterized in that** the filter (50) is movable inside the seat (51) to also assume an extraction position, in which the filter (50) can be extracted from the seat (51).

9. A fill tap as claimed in Claim 7 or 8, **characterized in that** the filter (50) rotates inside the seat (51) to assume said positions.

10. A fill tap as claimed in one of the foregoing Claims, **characterized in that** the filter (50) comprises a body (80) which extends along an axis (B), is insertable inside the seat (51) along said axis (B), and rotates inside the seat (51) about said axis (B).

11. A fill tap as claimed in one of the foregoing Claims, **characterized by** comprising sealing members (87, 88) between the filter (50) and the seat (51).

12. A fill tap as claimed in one of the foregoing Claims, **characterized in that** the filter (50) comprises a filtering portion (82) and a shutter portion (83); the filter (50) being movable to alternatively cause the filtering portion (82) and the shutter portion (83) to engage the water flowing in the inlet conduit (7).

13. A fill tap as claimed in Claim 12, **characterized in that** the filtering portion (82) and the shutter portion (83) are defined respectively by a perforated plate (92) and a solid plate (93); said plates (92, 93) being arranged crosswise and perpendicular to each other.

14. A fill tap as claimed in Claim 12 or 13, **characterized in that** the filter (50) comprises a substantially cylindrical head (81), from which the filtering portion (82) and the shutter portion (83) extend.

15. A flush tank (2) comprising a vessel (2a) and a float-controlled fill tap (1), **characterized in that** the fill tap (1) is a fill tap as claimed in any one of the foregoing Claims.

16. A flush tank as claimed in the foregoing Claim, **characterized in that** the inlet conduit (7) extends substantially vertically from a bottom wall (47) of the tank (2).
